# EUROPÄISCHE PATENTSCHRIFT

(11) **EP 1 369 302 B1**
(45) Veröffentlichungstag und Bekanntmachung des Hinweises auf die Patenterteilung: **24.12.2008**
(21) Anmeldenummer: 03012656.9
(22) Anmeldetag: 04.06.2003
(51) Int. Cl.: B60R 11/02

(54) **Anordnung zur Anbringung eines Gerätes in einem Fahrzeug**
Mounting arrangement for an apparatus in a vehicle
Dispositif de fixation d'un appareil dans un véhicule

(30) Priorität: 06.06.2002 DE 10225330; 06.06.2002 DE 20208858 U; 30.10.2002 DE 20216797 U
(43) Veröffentlichungstag der Anmeldung: 10.12.2003
(73) Patentinhaber: Grundig Multimedia B.V., 1083 HJ Amsterdam (NL)
(72) Erfinder: Seidenschnur, Hans W., 90765 Fürth (DE); Pröll, Jürgen, 90766 Fürth (DE)
(74) Vertreter: Pröll, Jürgen

(56) Entgegenhaltungen:
- WO-A-02/073964
- DE-U- 20 003 659
- DE-U- 29 518 369
- US-A- 6 097 448
- US-A1- 2001 011 664

## Beschreibung

Die Erfindung betrifft eine Anordnung zur Anbringung eines Gerätes in einem Fahrzeug und insbesondere zur Anbringung an einem Sitz in einem Kraftfahrzeug mit den Merkmalen des Anspruches 1.

Bei Multimedia-Komponenten besteht die Problematik, dass die moderne Elektronik, insbesondere die Kommunikationstechnik und Unterhaltungselektronik immer stärkeren Einzug in Fahrzeuge nimmt. Da die Raumverhältnisse in einem Fahrzeug, insbesondere der für Passagiere und Multimedia-Geräte eher gering sind, ergibt sich die Problematik, diese komfortabel und einfach anzubringen, insbesondere bei der Nachrüstung.

Bei Neuaustattungen oder weitreichenden Umbauten an Kraftfahrzeugen ist es bekannt, die Bildschirme und die zugehörigen Datenbereitstellungsgeräte direkt in die Vordersitze eines Fahrzeuges zu integrieren. Dies hat den Nachteil, dass die Einbaukosten sehr hoch sind und daher im Nachrüstgeschäft dies nicht oder nur sehr selten zur Anwendung kommt.

In neuerer Zeit sind Flachbildschirme im Handel erhältlich, welche an externe Einheiten wie beispielsweise Spielcomputer, Computer oder Empfangseinrichtungen und Wiedergabegeräte wie Tuner, DVD-Spieler, CD-Spieler, Spielkonsolen und/oder Videorecorder anschließbar sind. Somit ist es möglich, einen LCD-Bildschirm zur Darstellung zu benutzen.

Aus Kostengründen ist es daher wünschenswert, ein Gerät zum Entertainment der Fondpassagiere, insbesondere einen mobilen Bildschirm und ein Datenbereitstellungsgerät auch zum Einsatz in einem Fahrzeug zu bringen. Es stellt sich hierbei die Frage der Annordnung und zugleich des Schutzes des Gerätes und des Bildschirmes vor Verschmutzung und Beschädigung, da die Bildschirme und die Geräte relativ teuer sind. Außerdem soll gewährleistet sein, dass im Falle eines Auffahrunfalles die Geräte und/oder Bildschirme keine Gefahr für Insassen als dann frei herumfliegendes Teil darstellen.

Aus US-2000-0011664-A1 ist eine Vorrichtung zur Aufnahme eines Gerätes der Unterhaltungselektronik bekannt. Diese Vorrichtung ist in Form einer Tasche ausgestaltet und kann über Haken und Riemen am Sitz eines Kraftfahrzeuges angeordnet werden.

Aus US-6,097,448 ist eine Vorrichtung zur Aufnahme des audiovisuellen Gerätes offenbart. Dieses Gerät wird eine Vorrichtung eingefügt, welche über Haltevorrichtungen vorzugsweise am Sitz eines Fahrzeuges in einem Kraftfahrzeug anordenbar sind.

Aus DE-295 18 369-U1 ist eine Kopfstütze für einen Fahrzeugsitz offenbart, wobei an der Rückseite der Kopfstütze ein Bildschirm anordenbar ist.

Aus DE-200 03 659-U1 ist ein Kopfstützenüberzug, insbesondere für PKW's offenbart, welcher sich durch ein dehnbares Material auszeichnet und eine Aufnahme für einen Sender und einen Empfänger enthält.

Aus DE-A1-198 11 983 ist eine Hülle zur Aufnahme von Vorlagen bekannt. Diese bekannte Hülle besteht aus einer Grundfolie mit mindestens zwei sich kreuzenden, elastischen Soll-Biegstreifen, die in ihrem Kreuzungspunkt ausgespart und so breit sind, dass sich die mindestens vier entstehenden Folienbereiche in jede beliebe Richtung und in beliebiger Reihenfolge umklappen lassen.

Aus DE-A1-195 10 701 ist eine Hülle zur Aufnahme scheibenförmiger Informationsträger bekannt. Diese Hülle weist eine durch eine Lasche verschließbare Tasche auf, deren mit Informationen versehenen Seite des Informationsträgers zugewandten Seite durch einen Schutz- bzw. Schonfolie abgedeckt ist.

Aus DE-U1-299 08 187 ist ein Vorrichtungssystem zum lösbaren Halten von Hülle, Taschen und Mappen offenbart. Hierbei weist die Hülle eine eingeschwungene Metallplatte auf, welche von mehreren symmetrisch angeordneten Magneten gehalten wird.

Von der Firma Richard Paul Russel Ltd, UK, ist ein Umwelt-Messgerät "Kestrel 3000" bekannt. Dieses Gerät weist eine Schutzhülle auf. Das gerät selbst weist ein Display zur Anzeige von Messdaten auf. Das gerät ist aber nicht geeignet zur Bewegtbilddarstellung.

Von der Firma Compaq wird ein Pocket PC iPAQ vertrieben. Dieses Gerät weist einen farbigen LCD-Bildschirm auf. Für das Gerät ist als Zubehör eine Schutzhülle bekannt, welche im Bereich des LCD-Bildschirms durchsichtig ist. Allerdings ist diese Schutzhülle nicht dazu vorgesehen an einem Sitz befestigt zu werden.

Aufgabe der Erfindung ist es, eine Anordnung zur Anbringung eines Gerätes aufzuzeigen, welche es ermöglicht, das gerät in einem Kraftfahrzeug an einem dort befindlichen Sitz anzubringen.

Diese Aufgabe wird anhand der Merkmale des Anspruches 1 gelöst.

Die erfindungsgemäße Vorrichtung besteht aus einer vorzugsweise aus Kunststoff, hergestellten Hülle, welche derart ausgestaltet ist, dass in die Hülle ein Gerät eingefügt werden kann. Die Hülle umschließt das Gerät vorzugsweise beinahe im gesamten Gehäusebereich. Hierzu ist die Hülle derart ausgestaltet, dass sie eine Art Tasche aufweist, in welche das Gerät eingeschoben werden kann. Nach Einführung des Gerätes in diese Tasche ist das gerät nahezu voll umfänglich von der Hülle umschlossen. Auf diese Weise ist der das Gerät weitgehend vor Verschmutzung und Beschädigung in Form von direkter Einwirkung auf das Gerät geschützt. Die Hülle weist im Weiteren Haltevorrichtungen auf, welche dazu geeignet sind, die Hülle an einem Sitz oder an einer Kopfstütze eines Sitzes in einem Kraftfahrzeug zu fixieren bzw. dort anzubringen. Hierzu sind vorzugsweise an der Hülle Gurte oder Haltevorrichtungen in Form von Ösen und Haken vorhanden, mittels welcher die Hülle am Sitz, an der Kopfstütze des Sitzes oder den Verbindungsstellen des Sitzes und der Kopfstütze eines Fahrzeuges befestigt werden kann. Die Befestigung erfolgt an der Rückenlehne des Sitzes oder an der Rückseite der Kopfstütze. In einer vorteilhaften Ausgestaltung der Erfindung weist die Hülle eine verschließbare Öffnung auf, über welche das Gerät mit externen Quellen, beispielsweise Stromversorgung und Bilderzeugungseinheit bzw. Datenübertragungsstrecke angeschlossen werden kann. Hierdurch ist es möglich, das Gerät in der Hülle zu betreiben und mit externen Gerätekomponenten oder anderen externen Geräten oder Geräteteilen zu verbinden. Die Öffnung ist in einer vorteilhaften Ausgestaltung der Erfindung derart ausgestaltet, dass auch bei angeschlossenen Leitungen keine Verschmutzung von Außen an das Gerät herangeführt wird.

In einer weiteren vorteilhaften Ausgestaltung der Erfindung ist die Hülle als Überzug für den Sitz, insbesondere eines Sitzes in einem Fahrzeug oder als Überzug für eine Kopfstütze eines Sitzes ausgeführt.
Es kann auch eine Kombination Überzug für einen Sitz und Überzug für eine Kopfstütze gegeben sein.
Die Hülle dient als Halterung für das Gerät, als auch als Schutz des Sitzes bzw. der Kopfstütze des Sitzes in Form eines Schonbezuges bzw. Teilschonbezuges. Das Gerät kann an der Hülle angebracht sein. Die Anbringung kann insoweit als fixe und unlösbare Verbindung zwischen dem Gerät und der Hülle vorgesehen sein. In diesem Fall wird das Gerät mit der Hülle fest verbunden. In einer weiteren Ausgestaltung ist das Gerät lösbar mit der Hülle verbunden. Diese Verbindung kann mittels einer Vorrichtung erfolgen, welches eine Trennung des Geräte von der Hülle ermöglicht. In einer besonders vorteilhaften Ausgestaltung der Erfindung ist diese Vorrichtung als Haftband oder Klettverschluss oder Druckknopf ausgestaltet.

Bei dem Gerät handelt es beispielsweise um ein Gerät der Unterhaltungselektronik, wie etwa einen Fernsehsignalempfänger, eine Spielekonsole, einen DVD-Player, ein Display, insbesondere ein TFT-Display oder ein LCD-Display, oder einen Bildschirm oder allgemein ein Visuallisierungsgerät. Vorteilhaft ist weiterhin einen Bildschirm oder ein Display mit der Vorrichtung an einer Kopfstütze eines Sitzes anzubringen. In einer vorteilhaften Ausgestaltung der Erfindung kann über eine Verbindung eines über die Vorrichtung an der Kopfstütze angeordneten Bildschirms oder Displays in Verbindung zu einem in einer weiteren Hülle an einem Sitz angebrachtem Gerät, etwa einer Spielkonsole oder einem DVD-Player, ein Multimediasystem für Fondpassagiere eingerichtet werden, ohne dass ein Umbau des Fahrzeuges oder aufwendige Maßnahmen erforderlich wäre.

Im Weiteren wird die Erfindung anhand eines konkreten Ausführungsbeispieles näher beschrieben. Hierbei ist das Ausführungsbeispiel speziell für einen LCD-Bildschirm zugeschnitten, der an einem Sitz befestigt wird.

Es zeigt:

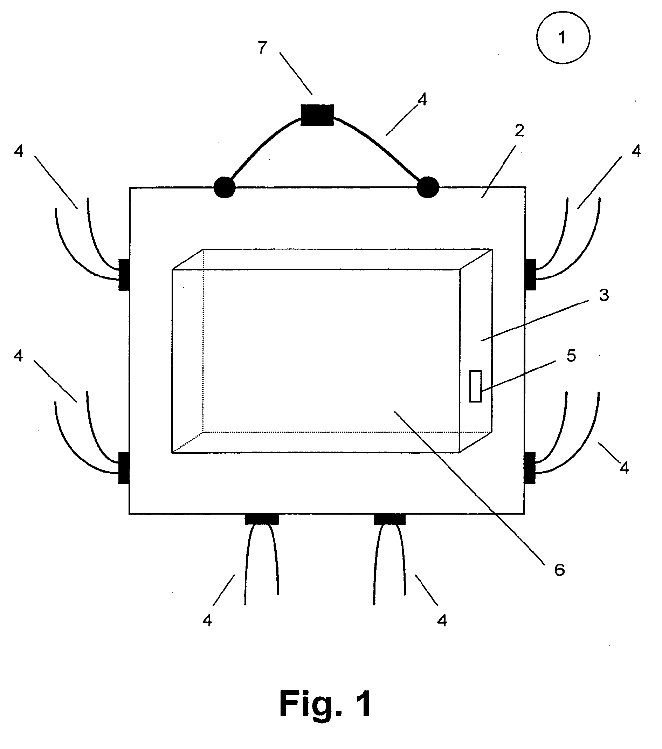

- Fig. 1: eine erfindungsgemäße Ausgestaltung der Hülle und

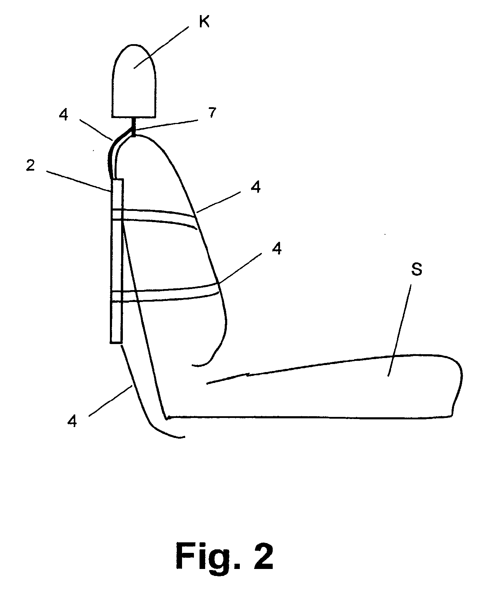

- Fig. 2: eine schematische Ausführungsform der Hülle mit Fixierung an einem Sitz in einem Fahrzeug.

Diese konkrete Lösung ermöglicht es, einen LCD-Bildschirm in eine Hülle 1 einzufügen und über Verankerungen bzw. Haltevorrichtungen an einem Sitz S in einem Kraftfahrzeug anzubringen. Die Hülle 1 dient zugleich als Tragevorrichtung und Schutzhülle für den LCD-Bildschirm.

Die erfindungsgemäße Hülle 1 weist hierzu eine Grundfläche 2 auf, in welcher eine Art Tasche 6 eingearbeitet ist.

Diese Tasche 6 weist Abmessungen auf, welche einem LCD-Bildschirm entsprechen und dient zur Aufnahme eines LCD-Bildschirmes. Die Tasche 6 ist derart ausgestaltet, dass sie an einer Seite zu öffnen ist. Durch diese Öffnung wird der LCD-Bildschirm in die Tasche 6 eingeschoben. Die Öffnung ist wiederverschließbar. Vorzugsweise ist die Öffnung über Druckknöpfe, Klettverschluss, Klebestreifen, mechanische Fixierungen usw. wieder verschließbar. Die Tasche 6 weist eine Öffnung 5 auf. Über diese Öffnung 5 sind externe Anschlusskabel dem in der Tasche 6 befindlichen LCD-Bildschirm zuführbar. Auf diese Weise ist es möglich, an den LCD-Bildschirm externe Einheiten, wie beispielsweise einen Rundfunksignal-Empfänger, einen DVD-Spieler, einen Spielecomputer etc. anzuschließen und die Daten bzw. Laufbilder oder Fernsehprogramme wiederzugeben bzw. darzustellen. Im Weiteren wird über diese Öffnung 5 die notwendige Stromversorgung für den LCD-Bildschirm hergestellt. Außerdem ist über die Öffnung 5 die Möglichkeit vorhanden, weitere Steuerungsleitungen zum LCD-Bildschirm zu verbringen. Die Öffnung 5 ist in der Art ausgestaltet, dass sie auch bei eingeführtem Datenverbindungskabel verschließbar ist und somit gewährleistet, dass der LCD-Bildschirm von Verschmutzung über diese Öffnung 5 geschützt ist.

Die Tasche 6 ist vorzugsweise aus durchsichtigem Material gefertigt um es zu ermöglichen, dass ohne optische Beeinträchtigung das dargestellte Bild auf dem in die Tasche 6 eingeschobenen LCD-Bildschirm wahrgenommen werden kann. Besonders vorteilhaft hat sich erwiesen, Kunststoffmaterial in Form einer durchsichtigen farblosen Kunststoff-Folie zu verwenden, welche ein darzustellendes Bild auf dem Bildschirm nicht verfälscht.

In einer weiteren vorteilhaften Ausgestaltung der Erfindung weist die Tasche 6 im Frontbereich, in welchem das Bild des LCD-Bildschirmes dargestellt wird, eine Aussparung auf, durch welche die Bilddarstellungsfläche des LCD-Bildschirmes ohne Überdeckung durch das Material der Tasche 6 herausscheint. Zur Befestigung sind in diesem Falle an den Innenrändern der Aussparung der Tasche 6 Fixierungen vorgesehen, welche eine lösbare Verbindung zwischen dem in die Tasche 6 eingeschobenen LCD-Bildschirm und der Tasche 6 selbst herstellen. Hierdurch wird der LCD-Bildschirm in der Tasche 6 und somit an der Hülle 1 gehalten.

Im Weiteren weist die Hülle 1 Fixiervorrichtungen 4 auf, über mittels welcher die Hülle 1 am Sitz S eines Kraftfahrzeuges angeordnet werden kann. In vorzugsweiser Ausführung handelt es sich bei den Vorrichtungen 4 um Gurte bzw. Bänder, wobei die Bänder Arretier-Vorrichtungen aufweisen, damit die Bänder mit dem Sitz S und der Hülle 1 eine lösbare Verbindung herstellen. Vorzugsweise werden die Bänder bzw. das Band an der Kopfstütze K bzw. an den Verbindungsstellen der Kopfstütze K mit dem Sitz S im Kraftfahrzeug fixiert. Es muss dann zumindest eine weitere Verbindung zwischen dem Sitz S und der Hülle 1 hergestellt werden. Dies wird möglich, indem im unteren Bereich des Sitzes S eine Arretierung bzw. Befestigung zwischen dem Sitz S und der Hülle 2 erfolgt.

In einer weiteren vorteilhaften Ausgestaltung der Erfindung ist die Hülle 2 als Überzug für den Sitz S ausgeführt. In diesem Fall ist die Tasche 6 als Bestandteil der Hülle 2 in dieser direkt integriert. Die Hülle 2 dient dann sowohl als Schutz und Halterung für den LCD-Bildschirm, als auch als Schutz des Sitzes S in Form eines Schonbezuges bzw. Teilschonbezuges.

In einer vorteilhaften Ausgestaltung der Erfindung ist an der Hülle 1 im unteren Bereich ein verschieblicher Keil angeordnet. Bei Fixierung der Hülle 1 am Sitz S kann über den Keil, abhängig von der Neigung der Lehne des Sitzes S, die Hülle 1 mit dem LCD-Bildschirm im unteren Bereich der Lehne mit dieser verspannt werden. Somit werden Pendelbewegungen der Hülle 1 vermieden. Über den Keil kann der Neigungswinkel der Hülle 1 und des LCD-Displays in vertikaler und/oder horizontaler Richtung verändert werden, so dass für einen Nutzer des LCD-Bildschirmes eine optimale Sichtposition eingestellt werden kann. Bei Veränderung der Neigung der Lehne des Sitzes S kann über den Keil dennoch eine optimale Sichtposition für den Nutzer eingestellt werden. Der Keil vorzugsweise ist als Kegel oder Pyramide ausgestaltet.

In der beschriebenen Weise ist es auch möglich den LCD-Bildschirm an der Kopfstütze anzuordnen.

Durch diese erfindungsgemäße Ausführung ist es auf überraschend einfache Art und Weise möglich, für beispielsweise Frondpassagiere in einem PKW ein Multimedia-System mit Bildanzeigeeinheit zu integrieren, ohne in das Interieur eingreifen zu müssen. Dies ermöglicht ein problemloses Nachrüsten von PKW's auf billige und einfache Weise.

## Patentansprüche

1. Vorrichtung zur Aufnahme eines Gerätes und zur Befestigung an einem Sitz (S) eines Fahrzeuges, wobei an der Vorrichtung (1) Fixiereinrichtungen (4) vorgesehen sind, mittels derer die Vorrichtung (1) an dem Sitz (S), insbesondere der Lehne des Sitzes (S) oder den Kopfstütze des Sitzes (S) oder an der Verbindung zwischen dem Sitz (S) und der Kopfstütze, lösbar zu befestigen ist und die Vorrichtung (1) eine Tasche (6) aufweist, in welche ein Gerät über eine Öffnung in die Tasche (6) einführbar ist und die Öffnung wiederverschließbar ausgestaltet ist,
**dadurch gekennzeichnet, dass**
das Gerät ein Anzeigegerät ist und die Tasche (6) im Frontbereich Aussparungen aufweist, wobei die Aussparungen der Größe des sichtbaren Bereiches des Anzeigegerätes entsprechen und die Aussparungen auf der Innenseite der Tasche (6) Fixiervorrichtungen aufweisen, welche mit dem in die Tasche (6) eingeführten Gerät eine lösbare Verbindung eingehen und das Gerät in der Tasche (6) lösbar befestigen.

2. Vorrichtung nach Anspruch 1,
**dadurch gekennzeichnet, dass**
das die Vorrichtung (1) als Hülle ausgestaltet ist.

3. Vorrichtung nach Anspruch 1 oder 2,
**dadurch gekennzeichnet, dass**
das Gerät ein Gerät der Unterhaltungselektronik ist.

4. Vorrichtung nach Anspruch 3
**dadurch gekennzeichnet, dass**
das Gerät ein Fernsehsignalempfänger oder eine Spielekonsole oder ein DVD-Player oder ein Display, insbesondere ein TFT-Display oder ein LCD-Display, oder ein Bildschirm oder ein Visuallisierungsgerät oder ein LCD-Bildschirm ist.

5. Vorrichtung nach einem der Ansprüche 1 bis 3,
**dadurch gekennzeichnet, dass**
die Tasche (6) eine Öffnung (5) aufweist, über welche Anschlusskabel für das Gerät in die Tasche (6) einführbar sind.

6. Vorrichtung nach einem der Ansprüche 1 bis 5,
**dadurch gekennzeichnet, dass**
die Vorrichtung vorzugsweise an der Rückseite der Lehne des Sitzes (S) angeordnet ist.

7. Vorrichtung nach einem der Ansprüche 1 oder 2,
**dadurch gekennzeichnet, dass**
die Fixiereinrichtungen als Klettband ausgestaltet sind, wobei das Klettband an der Innenseite der Aussparungen angeordnet ist und am Rand des Gerätes Gegenstücke zur Eingehung einer Verbindung mit dem Kreppband angeordnet sind.

8. Vorrichtung nach einem der Ansprüche 1 oder 2 oder 7,
**dadurch gekennzeichnet, dass**
die Fixierungen (4) Bänder oder Bänder mit Haken sind, mittels derer die Hülle (1) am Sitz (S) oder der Kopfstütze lösbar zu befestigen ist.

9. Vorrichtung nach einem der Ansprüche 1 bis 8,
**dadurch gekennzeichnet, dass**
die Vorrichtung zumindest im Frontbereich aus durchsichtigem Material ausgeführt ist.

10. Vorrichtung nach einem der Ansprüche 1 bis 9,
**dadurch gekennzeichnet, dass**
die Vorrichtung (1) aus Kunststoff oder Gewebe gefertigt ist und/oder die Tasche (6) aus durchsichtigem Kunststoff besteht.

11. Vorrichtung nach einem der Ansprüche 1 bis 10,
**dadurch gekennzeichnet, dass**
die Vorrichtung (1) als Schonbezug für den Sitz (1) oder die Kopfstütze des Sitzes (1) dient.

12. Vorrichtung nach einem der Ansprüche 1 bis 11,
**dadurch gekennzeichnet, dass**
Vorrichtung über die Lehne des Sitzes (S) und/oder die Kopfstütze des Sitzes (1) gestülpt ist.

13. Vorrichtung nach einem der Ansprüche 1 bis 12,
**dadurch gekennzeichnet, dass**
im unteren Bereich der Vorrichtung (1) ein Keil angeordnet ist, der in vertikaler Richtung verschieblich angeordnet ist und sich zwischen der Lehne des Sitzes (S) und der Vorrichtung (1) befindet.

14. Vorrichtung nach einem der Ansprüche 1 bis 13,
**dadurch gekennzeichnet, dass**
die Abmessungen der Tasche (6) den Abmessungen des Gerätes entsprechen und/oder die Tasche (6) fest mit der Vorrichtung (1) verbunden ist.

## Claims

1. Device for holding an appliance and for attachment to a seat (S) in a motor vehicle, wherein there are provided on the device (1) fixing arrangements (4) by means of which the device (1) can be detachably fastened to the seat (S), in particular the back of the seat (S) or the headrest of the seat (S) or to the connection between the seat (S) and the headrest, and the device (1) has a pocket (6) into which an appliance can be introduced via an opening in the pocket (6) and the opening is configured so as to be re-closable,
**characterised in that**
the appliance is an indicating appliance and the pocket (6) has clearances in the frontal region, the clearances corresponding to the size of the visible region of the indicating appliance and having, on the inside of the pocket (6), fixing devices which enter into a detachable connection with the appliance which has been introduced into the pocket (6), and fasten the appliance in the pocket (6) in a detachable manner.

2. Device according to claim 1,
**characterised in that**
the device (1) is configured as an envelope.

3. Device according to claim 1 or 2,
**characterised in that**
the appliance is an appliance from the field of entertainment electronics.

4. Device according to claim 3,
**characterised in that**
the appliance is a television signal receiver or a games console or a DVD player or a display, in particular a TFT display or an LCD display, or a video screen or a visualisation device or an LCD video screen.

5. Device according to one of claims 1 to 3,
**characterised in that** the pocket (6) has an opening (5) via which connecting cables for the appliance can be introduced into the
pocket (6).

6. Device according to one of claims 1 to 5,
**characterised in that** the device is preferably disposed on the rear side of
the back of the seat (S).

7. Device according to one of claims 1 or 2,
**characterised in that**
the fixing arrangements are configured as a velcro-type strip, the velcro-type strip being disposed on the inside of the clearances and counter-pieces for entering into a connection with the velcro-type strip being disposed on the edge of the appliance.

8. Device according to one of claims 1 or 2 or 7,
**characterised in that**
the fixings (4) are strips or strips with hooks, by means of which the envelope (1) can be detachably fastened to the seat (S) or the headrest.

9. Device according to one of claims 1 to 8,
**characterised in that**
the device is constructed, at least in the frontal region, from transparent material.

10. Device according to one of claims 1 to 9,
**characterised in that**
the device (1) is manufactured from plastic or fabric and/or the pocket (6) consists of transparent plastic.

11. Device according to one of claims 1 to 10,
**characterised in that**
the device (1) serves as a protective cover for the seat (1) or the headrest of the seat (1).

12. Device according to one of claims 1 to 11,
**characterised in that**
the device is put over the back of the seat (S) and/or over the headrest of the seat (1).

13. Device according to one of claims 1 to 12,
**characterised in that**
there is disposed, in the lower region of the device (1), a wedge which is disposed so as to be displaceable in the vertical direction and is located between the back of the seat (S) and the device (1).

14. Device according to one of claims 1 to 13,
**characterised in that**
the dimensions of the pocket (6) correspond to the dimensions of the appliance and/or the pocket (6) is fixedly connected to the device (1).

## Revendications

1. Dispositif pour recevoir un appareil et pour le fixer sur un siège (S) d'un véhicule, des moyens de fixation (4) étant prévus sur le dispositif (1), au moyen desquels le dispositif (1) peut être fixé de manière détachable sur le siège (S), en particulier le dossier du siège (S) ou l'appui-tête du siège (S) ou encore à la jonction entre le siège (S) et l'appui-tête, et le dispositif (1) comporte une poche dans laquelle un appareil peut être introduit dans la poche (6) via une ouverture, et l'ouverture est réalisée de façon à pouvoir être refermée,
**caractérisé en ce que**
l'appareil est un appareil d'affichage et la poche (6) présente dans la zone frontale des échancrures, lesdites échancrures correspondant à la taille de la zone visible de l'appareil d'affichage et les échancrures présentent, sur la face intérieure de la poche (6), des dispositifs de fixation qui établissent une liaison détachable avec l'appareil introduit dans la poche (6) et fixent l'appareil dans la poche (6) de manière détachable.

2. Dispositif selon la revendication 1,
**caractérisé en ce que** le dispositif (1) est conçu à la manière d'une gaine.

3. Dispositif selon la revendication 1 ou 2,
**caractérisé en ce que** l'appareil est un appareil électronique de divertissement.

4. Dispositif selon la revendication 3, **caractérisé en ce que** l'appareil est un récepteur de signaux de télévision, ou une console de jeux, ou un lecteur DVD, ou un écran, en particulier un écran TFT ou un écran LCD, ou un écran d'un appareil de visualisation ou un affichage LCD.

5. Dispositif selon l'une des revendications 1 à 3,
**caractérisé en ce que** la poche (6) présentent une ouverture (5) via laquelle des câbles de raccordement pour l'appareil peuvent être introduits dans la poche (6).

6. Dispositif selon l'une des revendications 1 à 5, **caractérisé en ce que** le dispositif est agencé de préférence sur la face postérieure du dossier du siège (S).

7. Dispositif selon l'une des revendications 1 ou 2,
**caractérisé en ce que** les moyens de fixation sont réalisés sous forme de bande agrippante, la bande agrippante étant agencée au niveau de la face intérieure des échancrures, et **en ce que** des moyens antagonistes sont agencés à la bordure de l'appareil pour établir une liaison avec la bande agrippante.

8. Dispositif selon l'une des revendications 1 ou 2 ou 7,
**caractérisé en ce que** les moyens de fixation (4) sont des bandes, ou des bandes avec des crochets, au moyen desquels la gaine (1) peut être fixée de façon détachable sur le siège (S) ou sur l'appui-tête.

9. Dispositif selon l'une des revendications 1 à 8,
**caractérisé en ce que** le dispositif est réalisé en matériau transparent, au moins dans la zone frontale.

10. Dispositif selon l'une des revendications 1 à 9,
**caractérisé en ce que** le dispositif (1) est réalisé en matière plastique ou en textile et/ou **en ce que** la poche (6) est en matière plastique transparente.

11. Dispositif selon l'une des revendications 1 à 10,
**caractérisé en ce que** le dispositif (1) sert de housse protectrice pour le siège (1) ou pour l'appui-tête du siège (1).

12. Dispositif selon l'une des revendications 1 à 11,
**caractérisé en ce que** le dispositif est retroussé par dessus le dossier du siège (S) et/ou l'appui-tête du siège (1).

13. Dispositif selon l'une des revendications 1 à 12,
**caractérisé en ce qu'**un coin est agencé dans la zone inférieure du dispositif (1), celui-ci étant agencé avec possibilité de translation en direction verticale, et se trouvant entre le dossier du siège (S) et le dispositif (1).

14. Dispositif selon l'une des revendications 1 à 13,
**caractérisé en ce que** les dimensions de la poche (6) correspondent aux dimensions de l'appareil et/ou **en ce que** la poche (6) est reliée fermement au dispositif (1).
